# EUROPEAN PATENT SPECIFICATION

(11) **EP 1 711 588 B1**
(45) Date of publication and mention of the grant of the patent: **21.08.2013**
(21) Application number: 03782777.1
(22) Date of filing: 30.12.2003
(51) Int. Cl.: C11C 3/00, C11C 3/10, C11B 3/10, C10L 1/02

(54) **IMPROVED PROCESS FOR PREPARING FATTY ACID ALKYLESTERS FOR USE AS A BIODIESEL**
VERBESSERTES VERFAHREN ZUR HERSTELLUNG VON FETTSÄUREALKYLESTERN FÜR DIE VERWENDUNG ALS BIODIESEL
PROCEDE AMELIORE PERMETTANT DE PREPARER DES ALKYLESTERS D ACIDES GRAS UTILISABLES EN TANT QUE BIODIESEL

(43) Date of publication of application: 18.10.2006
(73) Proprietor: COUNCIL OF SCIENTIFIC & INDUSTRIAL RESEARCH, New Delhi 110001 (IN)
(72) Inventor: GUPTA, Ashok Kumar, Indian Institute of Petroleum, Dehradun 248 005, Uttar Pradesh (IN); BHATNAGAR, Ajay K., Indian Institute of Petroleum, Dehradun 248 005, Uttar Pradesh (IN); KAUL, Savita, Indian Institute of Petroleum, Dehradun 248 005, Uttar Pradesh (IN)
(74) Representative: Office Freylinger
(86) International application number: PCT/IN2003/000416
(87) International publication number: WO 2005/063954

(56) References cited:
- WO-A-03/066567
- GB-A- 2 072 167
- US-A- 5 525 126
- PATENT ABSTRACTS OF JAPAN vol. 1996, no. 03, 29 March 1996 (1996-03-29) -& JP 07 310090 A (TENSEI SEIYU KK), 28 November 1995 (1995-11-28)
- CHAI HON YEAN ET AL.: "Studies on the transesterification of glycerides: I: The methanolysis of tripalmitin catalysed by diorganotin (IV) compounds" APPLIED ORGANOMETALLIC CHEMISTRY, vol. 14, no. 6, 2000, pages 304-315, XP008032116 GBHARLOW
- G. ANTOLIN ET AL.: "Optimisation of biodiesel production by sunflower oil transesterification" BIORESOURCE TECHNOLOGY., vol. 83, no. 2, 2002 - 2002, pages 111-114, XP002286047 GBELSEVIER.

## Description

### Field of present invention:

The present invention relates to a process for the preparation of fatty acid alkyl esters suitable for use as biodiesel.

More particularly this invention relates to a process for the preparation of fatty acid alkyl esters suitable for use as biodiesel, by a single step catalytic esterification of free fatty acids and transesterification of triglycerides from vegetable oil or animal fats with a lower alcohol.

Biodiesel, generally defined as methyl esters of vegetable oils, animal fats and even waste frying oils. Biodiesel is renewable and know to emit less smoke and carbon monoxide than petro-diesel and produce no sulfur dioxide. Many studies have been reported to demonstrate the use of biodiesel to run diesel engine, either pure or blended with petro-diesel.

### Background and prior art references of the present Application

Biodiesel can be produced by transesterification of vegetable oil or fat with a monohydric alcohol in presence of a catalyst usually a base such as hydroxides or methanolate of sodium or potassium. Among the alcohols that can be used in the tranesterification are methanol, ethanol, propanol, butanol and aryl alcohol. Due to low cost, polarity and short chain methanol is used as alcohol in biodiesel production. Excess alcohol is generally used to shift the equilibrium to the product side. Glycerol is obtained as byproduct in the production of biodiesel by transestrification.

Vegetable oil or fat is generally obtained by extraction or pressing natural vegetable seeds and animal fats. It usually contains free fatty acids, phospholipids, sterols, water, odorants and other impurities. The refined oils also contain small amounts of free fatty acids and water.

The most common catalysts that can catalyse the transesterification to produce bio-diesel include alkali, acids or enzymes. The alkali include NaOH, KOH, sodium and potassium alkoxides such as sodium methoxide, sodium ethoxide, sodium propoxide, sodium butoxide. Generally used acid catalysts are sulfuric acid, phosphoric acid, hydrochloric acid and sulfonic acids.

Amongst the biocatalyst lipase can be used for transesterification reaction.

Due to their higher activity alkali catalysts are most commonly used on industrial scale.

With alkaline catalysts, the free fatty acid and water contents in the oil or fats significantly affects the transesterification and deactivates the catalyst and interfere with the separation of fatty acid esters and glycerol.

Recently various alkaline and acidic heterogeneous catalysts have also been reported to be used for transesterification of vegetable oils. These include alkaline earth metals or their salts such as CaO, MgO, calcium acetate, barium acetate, natural clays, zeolites, Sn, Ge or Pb, supported on various materials such as ZnO, MgO, TiO₂, activated carbon or graphite and inorganic oxides such as alumina, silica-alumina, boria, oxides of P, Ti, Zr, Gr, Zn, Mg, Ca and Fe.

In prior art processes such as described in the Kawahara et al. US Pat. No. 4, 164, 506, the Stem et al. US Pat.No. 4,698,186 and the Tanaka et aL US Pat. No. 4,303,590 triglycerides in fats and oils have been esterified in two-step process using an acidic catalysts in the first step followed by a second esterification using an alkaline catalyst. Both homogeneous and heterogeneous acidic catalyst have been included. The homogeneous acidic catalysts used included sulfuric acid, hydrochloric acid, para toluene sulfonic acid, methane sulfonic acid and so on. The heterogeneous catalyst include strong acidic sulfonated ion exchange resins and acidic zeolites. The alkaline catalysts used in second step included carbonate, hydroxide, and alkoxide of Na or K. The need for two step process is due to the fact that the free fatty acid present in the feedstock reacts with alkaline catalysts to produce soap, which emulsifies and solublises the fat and glycerol making it difficult to separate the ester and glycerol.

Sproles et.al. Patent No. US 2,366,494 discloses a two stage process for high acid value oils, alkali and then acid-catalysed transesterification were used. The free fatty acids were neutralized with alkali to form soap. After the triglycerides were converted to esters; 5% by wt g oil of H₂SO₄ was added to neturalise the alkali catalyst, release the free fatty acids from soap formed and acidity the systems. The mixture was transesterified for 3-4 h to make esters from free fatty acids.

The Japanese patent No. JP07310090 discloses a six-step process employing an alkali catalyst for producing fatty acid methyl esters.

The patent No. WO03/066567 discloses a process for preparing an alkylester of fatty acid using dibutoxide-dibutyl tin as catalyst.

The article published by Antolin et al. (Bioressource Technology, 83, 111-114, 2002) discloses studies on optimization of biodiesel production by sunflower oil transesterification under an alkaline medium using an alkali catalyst.

In the patent No.WO9115452 assigned Lundquist Carl-Johan (SE) there is claimed a process for the production of fatty acid alkyl esters through transesterification of vegetable oil in presence of primary alcohol over alkaline earth metal calcium and compounds thereof. The examples given in the patent refers only to the use of calcium, metal as such.

The US Patent No. 2,003,032,826 discloses a process for the production of fatty acid esters from triglycerides feedstock such as hydroxide, carbonate, alkoxide of alkali metals Na or K, sulfuric acid, hydrochloric acid, sulfonic acid or mixture thereof and lipase. The invention further provides for an apparatus for introducing alcohol into the triglyceride feed stream via a distributed feed system. CHAI HON YEAN et al. Appl. Organometallic Chem. 14,304-315, 2000) reported using only pure tripamitin (95%) as feedslock, in the presence of Tetrahydrofuran as a solvant to make the system homogeneous.

Basu et. al. US Patent No. 5,525,126 discloses a single step process for producing esters from a feedstock that includes a fat or an oil. The process includes mixing the feedstock with an alcohol, such as methanol and a catalyst comprising of 3:1 by weight mixture of calcium acetate and barium acetate; heating the reaction mixture to 200-250°C to about 3 hours and cooling the mixture rapidly. The process is claimed to produce esters from a oil having high free fatty acid content such as 50% by wt. to make a mixture of esters to fatty acid in a ratio of about 96:4 by weight.

In the alkali catalysed transesterification, the presence of water causes a partial reaction change to saponification, which produces soap. The soap consumes the catalyst and reduces catalyst activity, causing an increase in viscosity, formation gels and difficulty in separation of glycerol. Freedam et al- (J. Am. Oil Chem. Soc., 61, 1638-1643, 1984) reported that sodium hydroxide or sodium methoxide reacted with moisture and carbon dioxide in the air leading to lowering of their effectiveness to catalyse the transesterification of oil.

Although transesterification processes using alkali catalysts gives high conversion of fatty oil glycerides to esters in relatively shorter residence time, besides interference of water and free fatty acids with the reaction, the processes based on alkali catalysts have several drawbacks - these are energy intensive, recovery of glycerol is difficult, the acidic or alkaline catalyst has to be removed from the product, lot of alkaline waste water is produced which requires treatment. Further several steps such as evaporation of methanol, removal of saponified products, neutralization and concentration are needed to recover glycerol.

Due to the slow diffusion of triglycerides through the catalyst pores in heterogeneous catalysts such as supported metals, basic oxides and zeolites the transesterification reaction is slow, higher alcohol to glyceride molar ratio is required to achieve appreciable conversion of above 70%. Leaching of the base from the catalyst may lead to loss in activity.

### Objects of present invention

The main object of the present invention is to provide a improved process for the preparation of fatty acid alkyl esters suitable for use as biodiesel. Another object of the present invention is to provide a process for preparing lower alkyl esters of fatty acids by reacting triglycerides such as a vegetable oil or animal fat or free fatty acids or combinations thereof in single stage. Still another objective of the present invention to provide a catalyst which catalyses the esterification of fatty acids and transesterification of tri glycerides simultaneously producing lower alkyl esters suitable for use as diesel fuel.

Yet another objective of the present invention to provide a process and catalyst which can use of glycerides containing higher concentration of free fatty acids and moisture to produce esters.

Yet another objective of the present invention to provide a process for producing lower alkyl esters of fatty acids with improved separation and purification of esters and glycerin without the need of neutralization step.

### Summary of present invention

The present invention provides a process for the preparation of lower alkyl esters of fatty acids by reacting triglycerides such as a vegetable oil or animal fat or free fatty acids or combinations thereof. With lower alcohols such as methanol, ethanol, propanol or butanol in presence of a catalyst and purifying the esters thus produced. The esters produced are suitable for use as fuel in diesel engines either as such or blended with petro-diesel.

### Detailed description of present invention

Accordingly the present invention provides a process for preparing of fatty acid alkyl esters suitable for use as biodiesel which comprises reacting the starting substance selected from fatty acid glycerides selected from the group consisting of vegetable oil, animal, oil fat, fatty acid or mixtures thereof, with an alcohols having 1-4 carbon atoms in a reaction vessel wherein esterification of fatty acid and transesterification of triglyceride carried out simultaneously at a temperature in the range of 150-300°C, pressure in the range of 1-30 bar wherein the alcohol to starting substance molar ratio is in the range of 3:1 to 30:1 in presence of dioctyl tin oxide catalyst the concentration of the said catalyst is in the range of 0.01 to 3 weight percent of the starting substance, separating the glycerine from the fatty acid alkyl ester as immiscible phase by decantation, recycling recovering the excess alcohol by evaporation or distillation and, purifying the fatty acid alkyl esters by washing with water, treatment with an basic adsorbent selected from the bauxite, clay, alumina, silica-alumina, and distillation or combinations thereof.

In another embodiments of the present invention the catalyst used to esterify the fatty acids and transesterify the glycerides is a diocytyl tin oxide catalyst.

The concentration of catalyst is in the range of 0.01 to 3 weight percent of the starting substance.

In yet another embodiments of the present invention, alcohol used has 1-4 carbon atoms and is used in concentrations in the range of 3:1 to 30:1 mole/mole of the starting substance. A slight excess of alcohol is needed to push the reaction toward formation of alkyl ester.

In the process of the present intervention byproduct glycerin is recovered as an immiscible phase by decantation, the excess alcohol is recovered by distillation or evaporation.

In yet another embodiments of the present invention the alkyl esters are purified by washing with water, treatment with a basic adsorbent selected from the group consisting of bauxite, clay, alumina, silica-alumina, and distillation or combination thereof. The washings with water and treatment with adsorbent carried out at 20-60°C respectively.

The alkyl esters produced by the process of the present invention have been found suitable for use as fuel in diesel engines, blending component for petrodiesel and as additive in petrofuels for enhancing lubricity, cetane number and biodegradability.

Yet another embodiment wherein the biodiesel obtained has an acid value in the range of 0.01-0.50 mg KOH/g.

Still another embodiment wherein the biodiesel obtained has viscosity in the range of 0.04 cm²/s - 0.07 cm²/s (4-7 cSt) at 40 °C.

It will be apparent from the foregoing that the present invention provides a single process for producing lower fatty acid alkyl esters by reacting triglycerides, free fatty acids and animal fat with lower alcohols in presence of alkyl tin oxide as catalyst the process is ecofriendly since no alkali treatment is involved for the purification of alkyl esters.

The invention is further described by the following examples, which are given only for the purpose of illustration and are not intended to limit the scope of the invention.

### Example - 1

200 g of refined soya oil having acid value of 0.5 mg KOH/g, 72 g of Methanol and 1.2 g of catalyst (dioctyl tin oxide) were taken in a stirred reaction vessel made of SS 316, fitted with external electrical heating system and cooling coil inside. The reactants were heated to 150°C. The reaction was allowed to proceed for ½ h at 150°C and then the temperature was raised to 175°C and maintained for 3 h. After cooling to ambient temperature glycerol was separated as lower layer and methyl ester was obtained as upper layer. Methyl ester thus obtained was distilled under vacuum (5-10 mm Hg absolute pressure). The final methyl ester (bio-diesel) had an acid value of 0.03 mg KOH/g and viscosity of 0.0519 cm²/s (5.19 cSt) at 40°C.

### Example - 2

The example 1 was repeated with Jatropha curcas oil having acid value of d6.11 mg/KOH to obtain 200 g of the esters having the acid value of 0.04 mg KOH/g and viscosity 0.0493 cm²/s (4.93 cSt) at 40°C.

### Example - 3

The same example as in 2 was repeated except that the reaction was carried out at 175°C for 7 hrs to obtain 199.4 g of the ester. The ester was percolated through a column of basic alumina (20 g). The final methyl ester showed an acid value of 0.10 mg KOH/g and viscosity of 0.0404 cm²/s (4.04 cSt) at 40°C.

### Example - 4

The same example as was repeated with Madhuca indica oil with 17.4 mg/g KOH acidity except that the reaction was carried out for 5 hrs at 175°C. The product ester had a viscosity of 0.063 cm²/s (6.30 cSt) at 40°C and acid value of 0.2 mg KOH/g after washing with water followed by percolating through a column of bauxite.

### Example - 5

The same example as in 1 was repeated with Jatropha curcas of except that the reaction was carried out at 200°C for 3 hrs. The methyl esters thus obtained having viscosity of 0.0508 cm² (5.08 cSt) at 40°C and acid value of 0.09 mg KOH/g after distillation at 5 mm Hg.

### Example - 6

The same example as in 1 was repeated except that 144 g of methanol was used. The methyl ester thus obtained was treated with 20 g clay in a stirred vessel and filtered. The final methyl ester had an acid value of 0.3 mg KOH/g.

### Example - 7

The same as in example 6 except pure oleic acid of acidity of 200 mg KOH/g of sample was reacted with 76.0 g methanol for 6 hrs at 175°C to obtain 216.0 g methyl esters having an acidity of 16.091 mg KOH/g. The methyl ester thus produced was distilled at 5 mm Hg. The distilled ester product was finally percolated in a column having 25 g of bauxite. The final ester had an acid value of 0.08 mg KOH/g.

### Example -8

The same example as in 1 was repeated except that the oil was Jatropha curcas instead of refined soya oil and that the catalyst was 1.0 g of tertiary butyl Tin oxide in place of dioctyl tin oxide. The final methyl ester obtained had an acid value of 0.09 mg KOH/g.

### Advantages of present invention

1. Present process of preparation is a single step esterification as well as transesterification
2. Separation of fatty acid esters and glycerol is easy and does not require the neutralization step.

## Claims

1. A process for the preparation of fatty acid alkyl esters suitable for use as biodiesel, said process comprises the steps of,
a. reacting fatty acid glycerides with an alcohol having 1-4 carbon atoms in the molar ratio of 3:1 to 30:1 of fatty acids and triglycerides respectively, at a temperature ranging between 150-300°C, pressure in the range of 1-30 bar, in presence of a dioctyl tin oxide catalyst with concentration of catalyst is in the range of 0,01 to 3 weight percent of the fatty acid glycerides;
b. obtaining ester with glycerol;
c. separating the glycerine from the fatty acid alkyl ester as immiscible phase by decantation;
d. purifying the fatty acid alkyl esters by washing with water, and
e. washed ester is treated with an basic adsorbent to obtain biodiesel.

2. A process as claimed in claim 1, wherein fatty acid glycerides are selected from the group consisting of vegetable oil, animal oil, fatty acids and mixture thereof.

3. A process as claimed in claim 1, wherein the adsorbent is selected from the group consisting of bauxite, alumina, silica-alumina or combinations thereof.

4. A process as claimed in claim 1, wherein the use of catalyst is for the preparation of fatty acid alkyl esters which is suitable for use as biodiesel.

5. A process as claimed in claim 1, wherein the preferred temperature of the reaction is in the range of 150-200 °C

6. A process as claim 1, wherein the treatment with adsorbent is carried out at 20-60°C.

7. •A process as claimed in claim 1, wherein the excess alcohol is recovered and recycled.

8. A process as claimed in claim 1, wherein the biodiesel obtained has an acid value in the range of 0.01-0.50 mg KOH/g.

9. A process as claimed in claim 1, wherein the biodiesel obtained has viscosity in the range of 0.000004-0.000007 Newton second/meter (4-7 cSt) at 40 °C.

10. A process as claimed in claim 1, wherein the fatty acid alkyl esters produced are suitable for use as fuel in diesel engines, blending component for petrodiesel and as additive in petrofuel for enhancing lubricity, cetane number and biodegradability.

## Patentansprüche

1. Verfahren zur Herstellung von Fettsäurealkylestern, die zur Verwendung als Biodiesel geeignet sind, wobei das Verfahren die folgenden Schritte umfasst:
a. Umsetzen von Fettsäureglyceriden mit einem Alkohol, der 1 - 4 Kohlenstoffatome aufweist, im Molverhältnis von 3:1 bis 30:1 von Fettsäuren zu Triglyceriden bei einer Temperatur, die zwischen 150 und 300 °C liegt, und einem Druck im Bereich von 1 - 30 bar in Gegenwart eines Dioctylzinnoxid-Katalysators, wobei die Katalysatorkonzentration im Bereich von 0,01 bis 3 Gewichtsprozent der Fettsäureglyceride ist;
b. Erhalten von Ester mit Glycerin;
c. Trennen des Glycerins von dem Fettsäurealkylester als unmischbare Phase durch Dekantieren;
d. Aufreinigen der Fettsäurealkylester durch Waschen mit Wasser und
e. gewaschener Ester wird mit einem basischen Adsorbens behandelt, um Biodiesel zu erhalten.

2. Verfahren nach Anspruch 1, wobei Fettsäureglyceride aus der Gruppe bestehend aus pflanzlichem Öl, tierischem Öl, Fettsäuren und Gemischen davon ausgewählt sind.

3. Verfahren nach Anspruch 1, wobei das Adsorbens aus der Gruppe bestehend aus Bauxit, Aluminiumoxid, Siliciumdioxid-Aluminiumoxid oder Kombinationen davon ausgewählt ist.

4. Verfahren nach Anspruch 1, wobei die Verwendung des Katalysators zur Herstellung von Fettsäurealkylestern ist, die zur Verwendung als Biodiesel geeignet sind.

5. Verfahren nach Anspruch 1, wobei die bevorzugte Temperatur der Reaktion im Bereich von 150 - 200 °C liegt.

6. Verfahren nach Anspruch 1, wobei die Behandlung mit Adsorbens bei 20 - 60 °C durchgeführt wird.

7. Verfahren nach Anspruch 1, wobei der überschüssige Alkohol rückgewonnen und rückgeführt wird.

8. Verfahren nach Anspruch 1, wobei der erhaltene Biodiesel eine Säurezahl im Bereich von 0,01 - 0,50 mg KOH/g aufweist.

9. Verfahren nach Anspruch 1, wobei der erhaltene Biodiesel eine Viskosität im Bereich von 0,000004 - 0,000007 Newtonsekunden/Meter (4 - 7 cSt) bei 40 °C aufweist.

10. Verfahren nach Anspruch 1, wobei die hergestellten Fettsäurealkylester zur Verwendung als Kraftstoff in Dieselmotoren, Mischkomponente für Mineralöldiesel und als Additiv in Mineralölkraftstoff zur Verbesserung der Schlüpfrigkeit, Cetanzahl und biologischen Abbaubarkeit geeignet sind.

## Revendications

1. Procédé pour la préparation d'esters alkyliques d'acides gras appropriés pour leur utilisation comme biodiesel, ledit procédé comprenant les étapes dans lesquelles :
a. on fait réagir des glycérides d'acides gras avec un alcool contenant de 1 à 4 atomes de carbone dans le rapport molaire de 3:1 à 30:1 des acides gras et des triglycérides, respectivement, à une température qui se situe dans la plage entre 150 et 300 °C, sous une pression dans la plage de 1 à 30 bar, en présence d'un catalyseur d'oxyde de dioctylétain avec une concentration du catalyseur qui se situe dans la plage de 0,01 à 3 % en poids des glycérides d'acides gras ;
b. on obtient un ester avec du glycérol ;
c. on sépare le glycérol de l'ester alkylique d'acide gras sous la forme d'une phase non miscible par décantation ;
d. on purifie les esters alkyliques d'acides gras par lavage avec de l'eau ; et
e. on traite l'ester lavé avec un adsorbant basique pour obtenir du biodiesel.

2. Procédé selon la revendication 1, dans lequel les glycérides d'acides gras sont choisis parmi le groupe constitué par des huiles végétales, des huiles animales, des acides gras, et leurs mélanges.

3. Procédé selon la revendication 1, dans lequel l'adsorbant est choisi parmi le groupe constitué par la bauxite, l'alumine, la silice-alumine, ou leurs combinaisons.

4. Procédé selon la revendication 1, dans lequel l'utilisation du catalyseur concerne la préparation d'esters alkyliques d'acides gras qui sont appropriés pour une utilisation comme biodiesel.

5. Procédé selon la revendication 1, dans lequel la température préférée de la réaction se situe dans la plage de 150 à 200 °C.

6. Procédé selon la revendication 1, dans lequel le traitement avec l'adsorbant est mis en oeuvre à une température de 20 à 60 °C.

7. Procédé selon la revendication 1, dans lequel l'alcool en excès est récupéré et recyclé.

8. Procédé selon la revendication 1, dans lequel le biodiesel obtenu possède un indice d'acides dans la plage de 0,01 à 0,50 mg de KOH/g.

9. Procédé selon la revendication 1, dans lequel le biodiesel obtenu possède une viscosité dans la plage de 0,000004-0,000007 Newton seconde/mètre (4-7 cSt) à 40 °C.

10. Procédé selon la revendication 1, dans lequel les esters alkyliques d'acides gras que l'on obtient sont appropriés pour leur utilisation comme carburant dans des moteurs diesel, comme composant de mélange pour le pétrodiesel et comme additif dans du pétrofuel pour augmenter le pouvoir lubrifiant, l'indice de cétane et la biodégradabilité.
